# EUROPÄISCHE PATENTSCHRIFT

(11) **EP 2 476 852 B1**
(45) Veröffentlichungstag und Bekanntmachung des Hinweises auf die Patenterteilung: **10.08.2016**
(21) Anmeldenummer: 12150857.6
(22) Anmeldetag: 12.01.2012
(51) Int. Cl.: E06B 3/02, E06B 3/66, E04B 2/82

(54) **Montagehilfseinrichtung für einen Flügel einer Tür, eines Fensters oder dergleichen**
Assembly aid for a leaf of a door, window or the like
Dispositif d'aide au montage pour un battant de porte, de fenêtre ou analogue

(30) Priorität: 14.01.2011 DE 102011002677
(43) Veröffentlichungstag der Anmeldung: 18.07.2012
(73) Patentinhaber: GEZE GmbH, 71229 Leonberg (DE)
(72) Erfinder: Bauer, Ludwig, 75248 Ölbronn-Dürrn (DE)

(56) Entgegenhaltungen:
- DE-A1- 10 211 940
- DE-C2- 19 634 389
- DE-T2- 69 620 961

## Beschreibung

Die Erfindung betrifft ein Montagehilfswerkzeug aus Positionierung einer Randelements an einem Flügel einer Tür, eines Fensters oder dergleichen nach dem Oberbegriff des Patentanspruchs 1.

Aus der DE 196 34 389 C2 ist ein Flügel einer Tür, eines Fensters oder dergleichen bekannt. Der Flügel weist mindestens eine Scheibe, beispielsweise Glasscheibe auf, wobei mindestens ein Randelement zumindest abschnittsweise am Flügel montiert ist und als Trage- und/oder Randabschlusselement zur Befestigung von Beschlägen, Dichtungen oder dergleichen am Flügel dienen kann. Das Randelement ist mit der mindestens einen Scheibe durch eine Verklebung verbunden. Bei dieser Ausführung weist der Flügel mindestens zwei zueinander beabstandet angeordnete Scheiben auf, wobei mindestens ein Abstandshalter umlaufend zwischen den Scheiben angeordnet ist und den zwischen den Scheiben vorhandenen Innenraum des Flügels dicht umschließt, und wobei der Abstandshalter zumindest abschnittsweise von den Außenkanten der Scheiben unter Bildung eines Freiraums zurückversetzt angeordnet ist. Nachteilig ist, dass das Randelement bei seiner Montage am Flügel ohne definierte Fixpunkte in den Freiraum eingeführt wird, so dass das Randelement nach dem Aushärten der Verklebung gegebenenfalls in einer falschen Position relativ zu den Scheiben und/oder schief in dem Freiraum verklebt sein kann.

Aus der DE 696 20 961 T2 ist eine Vorrichtung zum Zusammenbau eines Scheibenpaares einer Mehrscheibeneinheit um einen Abstandhalterrahmen bei der Herstellung einer Mehrfachverglasung bekannt, die eine magnetische oder eine Unterdruckkraft zur Ausrichtung des Abstandhalterrahmens zu einer Scheibe verwendet.

In der DE 102 11 940 A1 ist ein Profilrahmen mit zwei auf gegenüberliegenden Seiten angeordneten Glasscheiben beschrieben. Auf diesen Profilrahmen sind Abdeckprofile über Zapfen in eine Nut eingeclipst.

Der Erfindung liegt die Aufgabe zugrunde, ein Montagehilfswerkzeug bereitzustellen, welches eine exakte Positionierung des Randelements am Flügel ermöglicht.

Ferner soll auch die Montage des Flügels wesentlich vereinfacht werden.

Die Aufgabe wird durch die Merkmale des Patentanspruchs 1 gelöst.

Die Unteransprüche bilden vorteilhafte Ausgestaltungsmöglichkeiten der Erfindung.

Erfindungsgemäß weist die Montagehilfseinrichtung mindestens ein Montagehilfswerkzeug auf, wobei - vor der Montage des Randelements an der mindestens einen Scheibe - das Montagehilfswerkzeug mit dem Randelement lösbar verbindbar ist, und wobei das mit dem Montagehilfswerkzeug versehene Randelement in die Montageposition an der mindestens einen Scheibe bringbar ist, und wobei die endgültigen Montageposition des Randelements an der mindestens einen Scheibe dadurch definierbar ist, dass das Montagehilfswerkzeug mit der mindestens einen Scheibe in Anlage bringbar ist, und wobei das Montagehilfswerkzeug - nach der Herstellung der Verklebung des Randelements mit der mindestens einen Scheibe - wieder von dem Randelement entfernbar ist

Das Montagehilfswerkzeug dient zur Definition einer exakten Montageposition des Randelements in Bezug auf die mindestens eine Scheibe. Hierzu kann das Montagehilfswerkzeug mindestens einen Auflageschenkel aufweisen, welcher mit der mindestens einen Scheibe in Kontakt kommt, wenn sich das Randelement in der endgültigen Montageposition befindet.

Das Randelement kann mindestens eine Kontaktfläche zur zumindest vorübergehenden Befestigung der Montagehilfseinrichtung aufweisen, und das Montagehilfswerkzeug kann ebenfalls mindestens eine Kontaktfläche aufweisen, wobei die Kontaktfläche des Montagehilfswerkzeugs mit der korrespondierenden Kontaktfläche des Randelements in Anlage bringbar ist.

Das Montagehilfswerkzeug kann in einen Aufnahmeraum des Randelements eingeführt werden und vorteilhaft durch manuelles Drehen an dem Randelement fixiert werden, d.h. es werden keine zusätzlichen Werkzeuge zur Fixierung des Montagehilfswerkzeugs am Randelement benötigt. Durch erneutes Drehen des Montagehilfswerkzeugs, z.B. in entgegengesetzter Richtung, lässt sich seine Fixierung am Randelement auf einfache Weise wieder aufheben.

Die Herstellung einer Ausführungsform des Flügels kann zumindest die folgenden Verfahrensschritte umfassen:
Unter Verwendung eines Dichtstoffs werden die Scheiben mit einem Abstandshalter verpresst, wobei der Abstandshalter so angeordnet wird, dass zumindest abschnittsweise ein zur Außenkante des Flügels offener Freiraum gebildet wird.

In den Freiraum wird weiterer Dichtstoff derart eingebracht, dass er zumindest die zum Freiraum gerichtete Außenkante des Abstandshalters und die unmittelbar daran angrenzenden Bereiche der Innenflächen der Scheiben überdeckt.

Da der Dichtstoff nach seinem Einbringen eine im Wesentliche wulstförmige Kontur aufweisen kann, wird er mittels eines Werkzeugs auf eine bestimmte Höhe nivelliert. Hierbei wird gegebenenfalls überschüssiges Material des Dichtstoffs entfernt.

An dem Randelement wird vor dessen Montage am Flügel mindestens ein Montagehilfswerkzeug der Montagehilfseinrichtung vorübergehend befestigt.

Das mit dem Montagehilfswerkzeug versehene Randelement wird in den Freiraum eingeführt, bis zumindest ein Auflageschenkel des Montagehilfswerkzeugs in Anlage mit zumindest einer der Scheiben kommt.

Zwischen dem nun in der gewünschten Montageposition befindlichen Randelement und der Innenfläche zumindest einer der Scheiben wird ein Klebstoff eingebracht.

Nach dem Aushärten des Klebstoffs wird das Montagehilfswerkzeug wieder entfernt, und gegebenenfalls wird überschüssiges Material des Klebstoffs entfernt.

Alternativ kann der Flügel - abweichend von der vorangehend beschriebenen Ausführung mit zwei parallel beabstandet angeordneten Scheiben und dazwischenliegend angeordnetem Abstandshalter und Randelement - auch anders ausgebildet sein, beispielsweise mit nur einer Scheibe oder mit mehr als zwei Scheiben, und/oder ohne Abstandshalter, und/oder mit einem zumindest abschnittsweise auf der Außenfläche der mindestens einen Scheibe aufliegend montiertem Randelement.

Im Nachfolgenden werden Ausführungsbeispiele in der Zeichnung anhand der Figuren näher erläutert.

Dabei zeigen:
- Fig. 1: eine Frontansicht einer Schiebetüranlage mit einem Flügel;
- Fig. 2: eine Schnittdarstellung des Randbereichs eines Flügels;
- Fig. 3a bis 3k: verschiedene Schritte der Herstellung des Flügels gemäß Fig. 2 unter Verwendung der erfindungsgemäßen Montagehilfseinrichtung;
- Fig. 4: eine Schnittdarstellung des Randbereichs eines abgewandelten Ausführungsbeispiels eines Flügels;
- Fig. 5: eine Schnittdarstellung des Randbereichs eines weiteren abgewandelten Ausführungsbeispiels eines Flügels;
- Fig. 6: eine Schnittdarstellung des Randbereichs eines weiteren abgewandelten Ausführungsbeispiels eines Flügels.

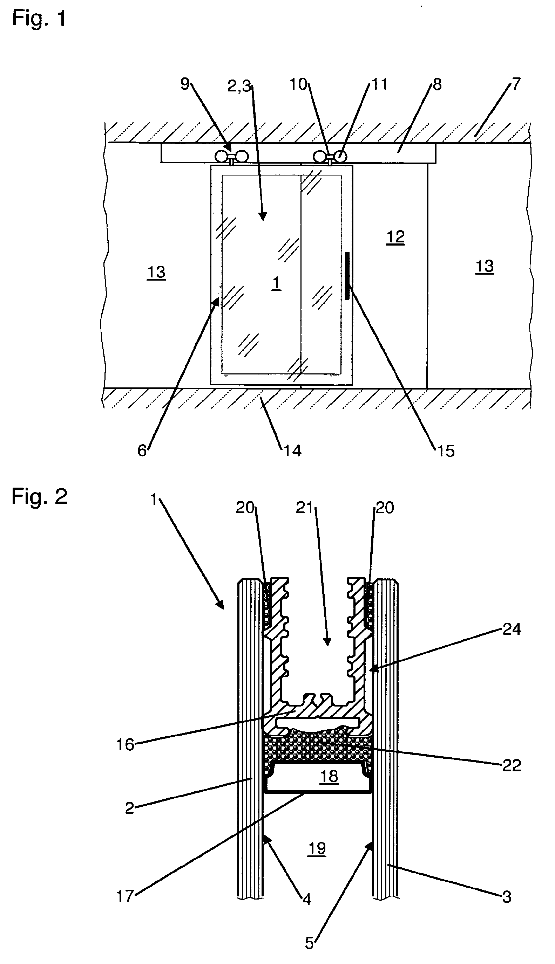

In der Fig. 1 ist eine Schiebetüranlage in Frontansicht dargestellt. Der in diesem Ausführungsbeispiel als Schiebetürflügel ausgebildete Flügel 1, welcher zwei zueinander parallele Scheiben 2, 3, insbesondere Glasscheiben, und eine im Randbereich 6 zumindest abschnittsweise zwischen den Scheiben 2, 3 angeordnete Trage- und/oder Randabschlusseinrichtung aufweist, ist entlang einer ortsfest an einer Gebäudedecke 7 angeordneten Führungsschiene 8 über eine Führungseinrichtung 9, welche zwei Rollenwagen 10 mit Laufrollen 11 aufweist, verschiebbar gelagert. Der durch den Flügel 1 verschließbare Durchgangsbereich 12 der Schiebetüranlage wird seitlich durch Gebäudewände 13 begrenzt. Eine im Randbereich des Flügels 1 montierte Griffeinrichtung 15 dient zur manuellen Betätigung des Flügels 1. Alternativ oder zusätzlich ist auch eine fremdkraftbetätigte Verschiebung des Flügels 1 durch eine Antriebseinrichtung denkbar. Im Bereich des Gebäudebodens 14 kann der Flügel 1 ebenfalls eine Führungseinrichtung aufweisen, welche der bodenseitigen Führung und/oder Verriegelung dienen kann, hier jedoch nicht dargestellt ist.

Der Flügel 1 ist, wie es insbesondere aus der Schnittdarstellung der Fig. 2 ersichtlich ist, als sogenannter integrierter Ganzglasflügel ausgebildet und weist zwei außenliegende, als Scheiben ausgebildete Scheiben 2, 3 auf, zwischen denen in Randbereich 6 umlaufend ein Abstandshalter 17 angeordnet ist. Der Abstandshalter 17 kann hierbei einstückig ausgebildet sein und an den Ecken des Flügels 1 jeweils umgebogen oder -geknickt sein. Alternativ kann der Abstandshalter 17 mehrstückig ausgebildet sein, beispielsweise pro Kante des Flügels 1 ein Profilstück, wobei die Profilstücke über Eckverbinder miteinander verbindbar sind. Der Abstandshalter 17 kann in einer Aufnahmekammer 18 ein mit dem Scheibeninnenraum 19 zusammenwirkendes Lufttrocknungsmittel enthalten, wozu der Abstandshalter 17 zum Scheibeninnenraum 19 hin gerichtete Öffnungen aufweist. Da die Öffnungen in anderen Schnittebenen liegen, sind sie in den Zeichnungen nicht dargestellt.

Der Abstandshalter 17, welches abdichtend mit den Scheiben 2, 3 verbunden, insbesondere verklebt ist und somit eine hermetische Abdichtung des Scheibeninnenraums 19 gegenüber der Umgebung gewährleistet, ist zu den Außenkanten der Flügel 1 zumindest abschnittsweise zurückgesetzt angeordnet, so dass randseitig zwischen den Scheiben 2, 3 und der Außenkante des Abstandshalters 17 ein Freiraum 24 für die Anordnung eines Randelements 16 der Trage- und/oder Randabschlusseinrichtung gebildet wird.

Die an den Freiraum 24 angrenzende Oberfläche des Abstandshalters 17 ist umlaufend mit einem Dichtstoff 22, beispielsweise einer Vergussmasse, abgedeckt, wodurch die Stabilität des Flügels 1 sowie die hermetische Abdichtung optimiert werden.

Das Randelement 16, welches in diesem Freiraum 24 abschnittweise oder vollständig umlaufend angeordnet werden kann und durch eine durch einen Klebstoff 20 gebildete Verklebung mit den Innenseiten der Scheiben 2, 3 verbunden ist, dient zur Befestigung von Beschlägen, Dichtungen oder dergleichen am Flügel 1. In diesem Ausführungsbeispiel ist das Randelement 16 im Wesentlichen U-förmig ausgebildet, wobei seitliche Profilschenkel, welche durch eine Profilbasis einstückig miteinander verbunden sind, zur Außenkante des Flügels 1 weisen. Somit bilden die beiden Profilschenkel mit der Profilbasis einen zur Außenkante des Flügels 1 gerichteten Aufnahmeraum 21 zur Befestigung der bereits erwähnten Beschläge, Dichtungen oder dergleichen. Der Aufnahmeraum 21 ist als hinterschnittene Nut ausgebildet, indem die seitlichen Profilschenkel des Randelements 16 Vorsprünge, insbesondere Stege aufweisen können, und ermöglicht somit die Fixierung der genannten Bauteile, beispielsweise durch mit den Vorsprüngen verklemmbare Nutensteine.

Die Scheiben 2, 3 können zumindest in dem der Abstandshalter 17 und das Randelement 16 überdeckenden Randbereich 6 eine diese Elemente abdeckende Maßnahme, z.B. Bedruckung, Beschichtung, Oberflächenbehandlung oder dergleichen, aufweisen.

Das Randelement 16 kann aus einem glasfaserverstärkten Kunststoff (GFK) ausgebildet sein. Die annähernd gleiche Längenausdehnung der Scheiben 2, 3 und des aus GFK ausgebildeten Randelements 16 wirkt sich vorteilhaft auf die Dauerfestigkeit des Flügels 1 aus. Selbstverständlich können die Profile des Randelements 16 alternativ auch aus anderen geeigneten Materialien ausgebildet sein.

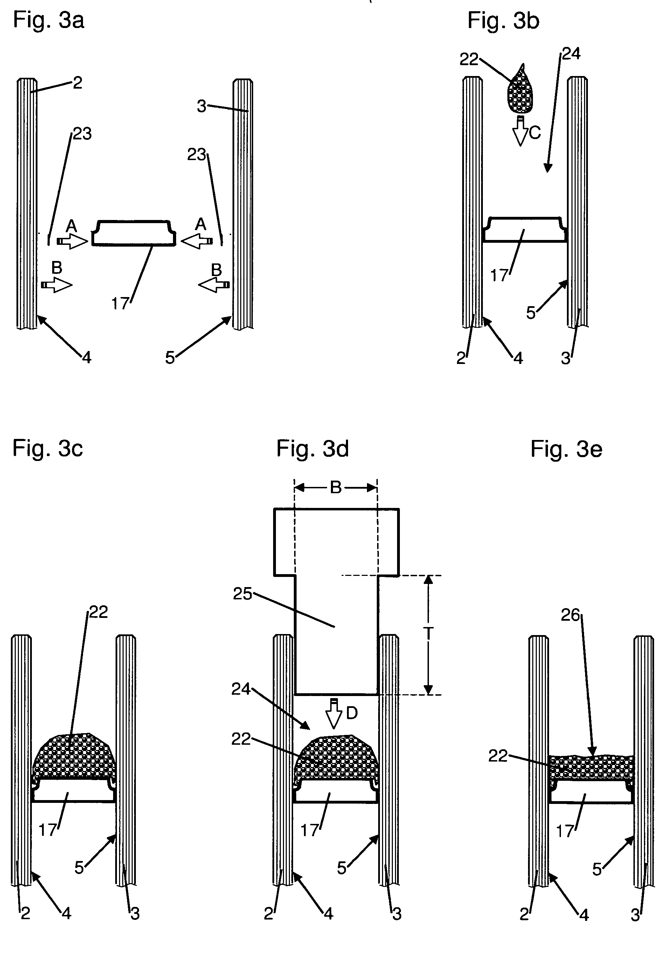

In den Fig. 3a bis 3k sind die Schritte zur Herstellung des vorangehend beschriebenen Flügels 1 dargestellt.

In einem ersten, in Fig. 3a dargestellten Schritt werden die Scheiben 2, 3 mit dem Abstandshalter 17 verpresst. Der Abstandshalter 17 wird vorbereitend an seinen den Innenflächen 4, 5 der Scheiben 2, 3 zugewandten Flächen mit Dichtstoff 23 versehen (Pfeil A) und die Scheiben 2, 3 anschließend mit dem in der gewünschten Stellung (Abstand des Abstandshalters 17 zum Außenrand der Scheiben 2, 3) positionierten Abstandshalter 17 verpresst.

In alternativen, hier nicht dargestellten Ausführungen kann der Abstandshalter 17 auch auf andere Weise ohne zusätzlichen Dichtstoff 22 abdichtend mit den Scheiben 2, 3 verbunden werden, z.B. durch Warmverpressen eines selbstdichtend und -klebenden Abstandshalters 23 mit den Scheiben 2, 3.

Anschließend (hier nicht dargestellt) werden die Kanten der Scheiben 2, 3 durch Klebeband abgeklebt, um sie bei den weiterer Herstellungsschritten vor Beschädigung und Verschmutzung zu schützen.

Im nächsten, in Fig. 3b dargestellten Schritt wird in den durch die Außenfläche des umlaufenden Abstandshalters 17 und die angrenzenden Innenflächen der Scheiben 2, 3 definierten Freiraum 24 ein Dichtstoff 22 eingebracht (Pfeil C). Der Dichtstoff 22 wird beispielsweise mittels einer Düse so in den Freiraum 24 eingespritzt, dass die Außenfläche des umlaufenden Abstandshalters 17 vollständig von dem Dichtstoff 24 überdeckt ist. Es wird der in Fig. 3c dargestellte Zwischenzustand erreicht.

Sodann wird im nächsten, in Fig. 3d dargestellten Schritt ein Werkzeug 25, beispielsweise in Form eines Spachtels, in den Freiraum 24 eingeführt (Pfeil D). Die Breite B des Werkzeugs 25 ist geringfügig kleiner als der Abstand der Innenflächen 4, 5 der Scheiben 2, 3, so dass sich das Werkzeug 25 klemmfrei im Freiraum 24 bewegen lässt. Die Eintauchtiefe T des Werkzeugs 25 wird definiert durch Auflagen, welche auf den Außenkanten der Scheiben 2, 3 aufliegen und entlang gleiten. Die Vorderkante des Werkzeugs 25 taucht in die zuvor eingebrachte Masse des Dichtstoffs 22 ein, so dass durch ein Entlangziehen des Werkzeugs 25 entlang der Scheibenaußenkante der Dichtstoff 22 auf eine bestimmte, durch das Werkzeug 25 definierte Höhe nivelliert wird. Überschüssiger Dichtstoff 22 wird bei Bedarf von dem Werkzeug 25 abgestreift. Nach diesem Bearbeitungsschritt ist der Dichtstoff 22 nicht mehr wulstförmig, sondern mit einer relativ ebenen Oberfläche 26, d.h. es wird der in Fig. 3e dargestellte Zwischenzustand erreicht.

Nun kann das Randelement 16 am Flügel 1 montiert werden.

Vor der Beschreibung der weiteren Montageschritte werden noch weitere Einzelheiten des Randelements 16 näher beschrieben: Das im Querschnitt im Wesentlichen U-förmige Randelement 16 weist unterhalb seiner Profilbasis zwei C-förmig gebogene Vorsprünge 32 auf, welche mit der Profilbasis eine T-Nut 27 bilden. An den Außenseiten der seitlichen Profilschenkel sind stegförmige Vorsprünge 30 angeformt. Auch die Vorsprünge 32 der Profilbasis ragen über die Außenflächen der seitlichen Profilschenkel hinaus, so dass entsprechend zwischen bzw. neben den Vorsprüngen 30, 32 entsprechende Einschnürungen 29, 31 vorhanden sind. Zwischen den an den Innenseiten der seitlichen Profilschenkel vorhandenen, stegförmigen Vorsprüngen sind Kontaktflächen 28 vorhanden.

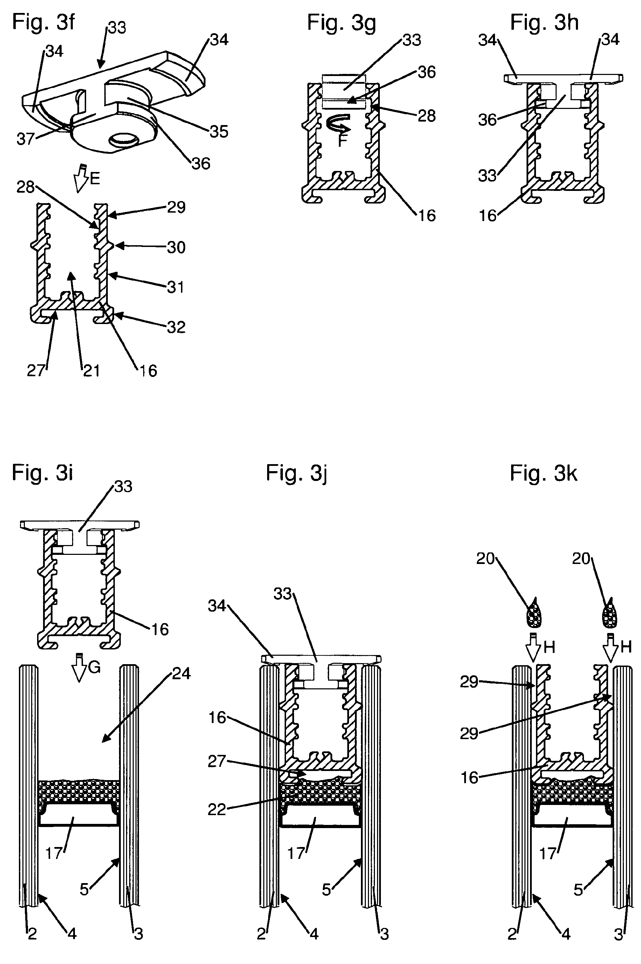

Im nächsten, in Fig. 3f bis 3h dargestellten Schritt wird ein Montagehilfswerkzeug 33 der erfindungsgemäßen Montagehilfseinrichtung mit dem Randelement 16 verbunden (Pfeil E in Fig. 3f). Das Montagehilfswerkzeug 33 ist im Querschnitt im Wesentlichen T-förmig ausgebildet und weist zwei Auflageschenkel 34 sowie einen zylindrischen Schaft 35 auf, an dessen unterem Rand sich zwei kreissegmentförmige Kontaktflächen 36 befinden. Die Breite des Montagehilfswerkzeugs 33 wird definiert durch den Abstand zweier paralleler Abflachungen 37 und ist geringfügig kleiner als die lichte Weite des Aufnahmeraums 21 des Randelements 16. Wenn die Abflachungen 37 zumindest annähernd parallel zur Längsachse des Randelements 16 gehalten werden, lässt sich das Montagehilfswerkzeug 33 in den Aufnahmeraum 21 des Randelements 16 einführen. Wenn sich die Unterkanten der Auflageschenkel 34 in Höhe der Oberkante des Randelements 16 befinden, wird das Montagehilfswerkzeug 33 um 90° gedreht (Pfeil F in Fig. 3g). Da die kreissegmentförmigen Kontaktflächen 36 denselben diametralen Abstand haben wie der Abstand korrespondierender Kontaktflächen 28 des Randelements 16, kommen die Kontaktflächen 36 des Montagehilfswerkzeugs 33 mit den Kontaktflächen 28 des Randelements 16 in Anlage. Die Auflageschenkel 34 des Montagehilfswerkzeugs 33 übergreifen nun die Oberkanten der seitlichen Profilschenkel des Randelements 16 und ragen über diese hinaus (Fig. 3h). Auf diese Weise werden pro Profilstück des Randelements 16 mindestens zwei Montagehilfswerkzeuge 33 platziert.

In dem in Fig. 3i dargestellten Schritt wird das mit den Montagehilfswerkzeugen 33 versehene Profil des Randelements 16 in den zwischen den Innenflächen 4, 5 der Scheiben 2, 3 vorhandenen Freiraum 24 eingeführt (Pfeil G). Die über die Oberkante des Randelements 16 hinaus ragenden Auflageschenkel 34 des Montagehilfswerkzeugs 33 kommen mit den Oberkanten der Scheiben 2, 3 in Anlage, d.h. es wird der in Fig. 3j dargestellte Zwischenzustand erreicht. Das Randelement 16 befindet sich nun in einer klar definierten Position zwischen den Scheiben 2, 3, da die seitlichen Vorsprünge 30 und Fortsätze des Randelements 16 eine Abstützung gegenüber den Innenflächen 4, 5 der Scheiben 2, 3 bieten. Die Fortsätze der Profilbasis sind in den noch nicht ausgehärteten Dichtstoff 22 eingedrungen, so dass verdrängter sowie gegebenenfalls noch an den Innenflächen 4, 5 der Scheiben 2, 3 anhaftender Dichtstoff 22 in die T-Nut 27 des Randelements 16 gelangt. Nach Aushärten des Dichtstoffs 22 ist bereits hierdurch eine sichere Fixierung des Randelements 16 im Freiraum 24 gegeben.

Da die Profile des Randelements 16 an den einzelnen Kanten des Flügels 1 einzeln eingesetzt werden, wird ein Wegschieben des noch weichen Dichtstoffs 22 im Eckbereich ausgeschlossen.

Die an den einzelnen Kanten des Flügels 1 angeordneten Randelemente 16 können an den Stoßstellen der Ecken jeweils einen kleinen Spalt aufweisen, welcher zur Hinterlüftung und Entwässerung des durch die Randelemente 16 definierten Randverbunds dient.

Um die Stabilität der Verbindung des Randelements 16 mit dem Flügel 1 zu optimieren, wird mit dem in Fig. 3k dargestellten Schritt ein Klebstoff 20 einer zusätzlichen Verklebung zwischen dem Randelement 16 und den Innenflächen 4, 5 der Scheiben 2, 3 eingebracht und dadurch eine zusätzliche Verklebung erzielt. In der dargestellten Ansicht ist eine andere Schnittebene gezeigt als in Fig. 3 j, da die Montagehilfswerkzeuge 33 immer noch am Randelement 16 montiert sind. Es ist vertretbar, die Bereiche, in denen die Montagehilfswerkzeuge 33 montiert sind, von dem Klebstoff 20 auszusparen, da diese kurzen Unterbrechungen der Verklebung die Stabilität der Verankerung des Randelements 16 nicht beeinträchtigen. Der Klebstoff 20, welcher beispielsweise aus demselben Material wie der Dichtstoff 22 bestehen kann, wird vorzugsweise mittels einer flachen Düse in die zwischen den Innenflächen 4, 5 der Scheiben 2, 3 und den seitlichen Profilschenkeln des Randelements 16 vorhandenen Einschnürungen 29 eingebracht (Pfeile H), so dass nach dem Aushärten des Klebstoffs 20, Entfernen der Montagehilfswerkzeuge 33 und gegebenenfalls Abschneiden überschüssigen Materials des Klebstoffs 20 der in der der Fig. 2 bereits dargestellte, fertige Zustand des Flügels 1 erreicht wird. Nun kann auch das (hier nicht dargestellte) Klebeband von den Kanten der Scheiben 2, 3 entfernt werden.

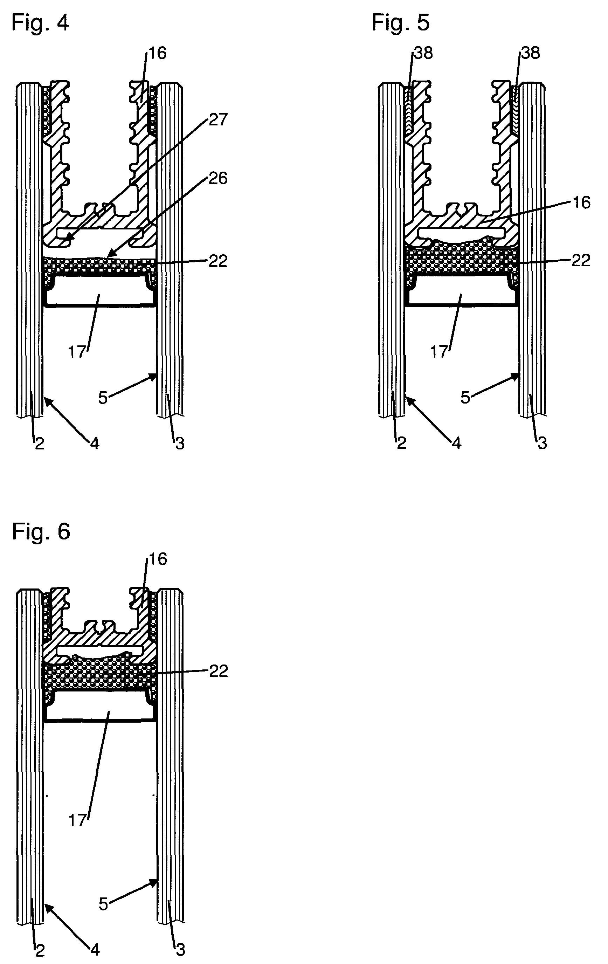

Ein weiteres, gegenüber Fig. 2 abgewandeltes Ausführungsbeispiel eines erfindungsgemäßen Flügels 1 ist in der Fig. 4 dargestellt. Im Unterschied zu dem voranstehend beschriebenen Ausführungsbeispiel ist die Profilbasis des Randelements 16 mit ihrer T-Nut 27 beabstandet zu der Oberfläche 26 des Dichtstoffs 22 angeordnet, wodurch eine optimale Trennung des Dichtstoffs 22 von dem Randelement 16, insbesondere von dessen Klebstoff 20 erreicht wird. Dies kann insbesondere dann erforderlich sein, wenn der Klebstoff 20 des Randelements 16 aus einem anderen Material besteht als der Dichtstoff 22 und diese beiden Materialien in unerwünschter Weise miteinander reagieren würden.

Ein weiteres, gegenüber den Fig. 2 und 4 abgewandeltes Ausführungsbeispiel wird in der Fig. 5 gezeigt. Im Unterschied zu den voranstehend beschriebenen Ausführungsbeispielen ist die Verklebung aus einem von dem Dichtstoff 22 abweichenden Klebstoff 38 ausgebildet, beispielsweise aus einem hochfesten Zweikomponenten-Konstruktionsklebstoff. Selbstverständlich kann alternativ auch bei diesem Ausführungsbeispiel das Randelement 16 beabstandet von dem Material des Dichtstoffs 22 angeordnet sein, wie es in dem Ausführungsbeispiel gemäß Fig. 4 dargestellt ist.

Ein weiteres, gegenüber den Fig. 2, 4 und 5 abgewandeltes Ausführungsbeispiel wird in der Fig. 6 gezeigt. Im Unterschied zu den voranstehend beschriebenen Ausführungsbeispielen ist das Randelement 16 mit kürzeren seitlichen Profilschenkeln ausgebildet. Selbstverständlich kann alternativ auch bei diesem Ausführungsbeispiel das Randelement 16 beabstandet von dem Material des Dichtstoffs 22 angeordnet sein, wie es in dem Ausführungsbeispiel gemäß Fig. 4 dargestellt ist, und/oder alternativ kann statt der mit dem Material des Dichtstoffs 22 ausgebildeten Verklebung ein hiervon abweichender Klebstoff 38 verwendet werden, wie es in dem Ausführungsbeispiel gemäß Fig. 5 dargestellt ist.

In weiteren, hier nicht dargestellten Ausführungsbeispielen kann auf die äußere Verklebung gegebenenfalls sogar verzichtet werden, wenn das Randelement 16, das bereits durch den Dichtstoff 22 in dem Freiraum 24 zwischen den Scheiben 2, 3 fixiert ist, keine hohen Kräfte übertragen muss.

### Liste der Referenzzeichen

- 1: Flügel
- 2: Scheibe
- 3: Scheibe
- 4: Innenfläche
- 5: Innenfläche
- 6: Randbereich
- 7: Gebäudedecke
- 8: Führungsschiene
- 9: Führungseinrichtung
- 10: Rollenwagen
- 11: Laufrolle
- 12: Durchgangsbereich
- 13: Gebäudewand
- 15: Griffeinrichtung
- 14: Gebäudeboden
- 16: Randelement
- 17: Abstandshalter
- 18: Aufnahmekammer
- 19: Scheibeninnenraum
- 20: Klebstoff
- 21: Aufnahmeraum
- 22: Dichtstoff
- 23: Dichtstoff
- 24: Freiraum
- 25: Werkzeug
- 26: Oberfläche
- 27: T-Nut
- 28: Kontaktfläche
- 29: Einschnürung
- 30: Vorsprung
- 31: Einschnürung
- 32: Vorsprung
- 33: Montagehilfswerkzeug
- 34: Auflageschenkel
- 35: Schaft
- 36: Kontaktfläche
- 37: Abflachung
- 38: Klebstoff

## Patentansprüche

1. Montagehilfswerkzeug (33) zur Positionierung eines Randelements (16) an einem Flügel (1) einer Tür, eines Fensters oder dergleichen, wobei der Flügel (1) mindestens eine Scheibe (2, 3) sowie mindestens das Randelement (16) aufweist, und wobei das Randelement (16) mit der mindestens einen Scheibe (2, 3) durch eine Verklebung verbindbar ist,
**dadurch gekennzeichnet,**
**dass** - vor der Montage des Randelements (16) an der mindestens einen Scheibe - das Montagehilfswerkzeug (33) mit dem Randelement (16) lösbar verbindbar ist, und das Montagehilfswerkzeug (33) mindestens eine Kontaktfläche (36) aufweist, welche mit mindestens einer korrespondierenden Kontaktfläche (28) des Randelements (16) in Anlage bringbar ist,
und wobei das mit dem Montagehilfswerkzeug (33) versehene Randelement (16) in die Montageposition an der mindestens einen Scheibe (2, 3) bringbar ist, und wobei die endgültigen Montageposition des Randelements (16) an der mindestens einen Scheibe (2, 3) dadurch definierbar ist, dass das Montagehilfswerkzeug (33) mit der mindestens einen Scheibe (2, 3) in Anlage bringbar ist, und das Montagehilfswerkzeug (33) mindestens einen Auflageschenkel (34) aufweist, welcher in der endgültigen Montageposition des Randelements (16) mit der mindestens einen Scheibe (2, 3) in Anlage ist, und somit eine exakte Positionierung des Randelements (16) am Flügel ermöglicht und wobei das Montagehilfswerkzeug (33) - nach der Herstellung der Verklebung des Randelements (16) mit der mindestens einen Scheibe (2, 3) - wieder von dem Randelement (16) entfernbar ist.

2. Montagehilfswerkzeug (33) nach einem oder mehreren der vorhergehenden Ansprüche,
**dadurch gekennzeichnet, dass** das Montagehilfswerkzeug (33) in den Aufnahmeraum (21) des Randelements (16) einführbar ist und durch Drehen an dem Randelement (16) fixierbar ist.

3. Montagehilfswerkzeug (33) nach einem oder mehreren der vorhergehenden Ansprüche,
**dadurch gekennzeichnet, dass** der Flügel (1) mindestens zwei zueinander beabstandet angeordnete Scheiben (2, 3) aufweist.

4. Montagehilfswerkzeug (33) nach Anspruch 3,
**dadurch gekennzeichnet, dass** der Flügel (1) mindestens einen Abstandshalter (17) aufweist, welcher umlaufend zwischen den Scheiben (2, 3) angeordnet ist und den zwischen den Scheiben (2, 3) vorhandenen Innenraum des Flügels (1) dicht umschließt sowie zumindest abschnittsweise von den Außenkanten der Scheiben (2, 3) unter Bildung eines Freiraums (24) zurückversetzt angeordnet ist.

5. Montagehilfswerkzeug (33) nach Anspruch 2 oder 3,
**dadurch gekennzeichnet, dass** das Randelement (16) zumindest abschnittsweise in dem Freiraum (24) zwischen den Scheiben (2, 3) angeordnet ist.

## Claims

1. Mounting assistance tool (33) for positioning an edge element (16) on a leaf/sash (1) of a door, a window or the like, wherein the leaf/sash (1) comprises at least one pane (2, 3) and at least the edge element (16), and wherein the edge element (16) can be connected to the at least one pane (2, 3) by an adhesive bond,
**characterized in that**
- prior to mounting the edge element (16) on the at least one pane - the mounting assistance tool (33) can be releasably connected to the edge element (16), and the mounting assistance tool (33) has at least one contact surface (36) which can be brought into contact with at least one corresponding contact surface (28) of the edge element (16),
and wherein the edge element (16) provided with the mounting assistance tool (33) can be brought into the mounting position on the at least one pane (2, 3), and wherein the final mounting position of the edge element (16) on the at least one pane (2, 3) can be defined by the fact that the mounting assistance tool (33) can be brought into contact with the at least one pane (2, 3), and the mounting assistance tool (33) has at least one bearing leg (34) which is in contact with the at least one pane (2,3) in the final mounting position of the edge element (16) and thus allows an exact positioning of the edge element (16) on the leaf/sash, and wherein
- after producing the adhesive bond between the edge element (16) and the at least one pane (2, 3) - the mounting assistance tool (33) can be removed again from the edge element (16).

2. Mounting assistance tool (33) according to Claim 1,
**characterized in that** the mounting assistance tool (33) can be introduced into the receiving space (21) of the edge element (16) and can be fixed to the edge element (16) by rotation.

3. Mounting assistance tool (33) according to one or more of the preceding claims,
**characterized in that** the leaf/sash (1) has at least two panes (2, 3) arranged with a spacing from one another.

4. Mounting assistance tool (33) according to Claim 3,
**characterized in that** the leaf/sash (1) has at least one spacer (17) which is circumferentially arranged between the panes (2, 3), tightly encloses the interior of the leaf/sash (1) present between the panes (2, 3) and is arranged so as to be set back at least in certain sections from the outer edges of the panes (2, 3) with the formation of a free space (24).

5. Mounting assistance tool (33) according to Claim 2 or 3,
**characterized in that** the edge element (16) is arranged at least in certain sections in the free space (24) between the panes (2, 3).

## Revendications

1. Outil d'aide au montage (33) pour le positionnement d'un élément de bord (16) au niveau d'un battant (1) d'une porte, d'une fenêtre ou similaire, le battant (1) présentant au moins une vitre (2, 3) ainsi qu'au moins l'élément de bord (16), et l'élément de bord (16) pouvant être connecté à l'au moins une vitre (2, 3) par collage,
**caractérisé en ce que**,
avant le montage de l'élément de bord (16) au niveau de l'au moins une vitre, l'outil d'aide au montage (33) peut être connecté de manière amovible à l'élément de bord (16) et l'outil d'aide au montage (33) présente au moins une surface de contact (36) qui peut être amenée en contact d'appui avec au moins une surface de contact correspondante (28) de l'élément de bord (16),
et l'élément de bord (16) pourvu de l'outil d'aide au montage (33) pouvant être amené dans la position de montage contre l'au moins une vitre (2, 3) et la position de montage finale de l'élément de bord (16) contre l'au moins une vitre (2, 3) pouvant être définie par le fait que l'outil d'aide au montage (33) peut être amené en contact d'appui avec l'au moins une vitre (2, 3) et l'outil d'aide au montage (33) présente au moins une branche d'appui (34) qui est en contact d'appui dans la position de montage finale de l'élément de bord (16) avec l'au moins une vitre (2, 3), et permet ainsi un positionnement exact de l'élément de bord (16) contre le battant, et l'outil d'aide au montage (33), après la réalisation du collage de l'élément de bord (16) à l'au moins une vitre (2, 3), pouvant être à nouveau enlevé de l'élément de bord (16).

2. Outil d'aide au montage (33) selon la revendication 1,
**caractérisé en ce que** l'outil d'aide au montage (33) peut être introduit dans l'espace de réception (21) de l'élément de bord (16) et peut être fixé par rotation à l'élément de bord (16).

3. Outil d'aide au montage (33) selon l'une quelconque ou plusieurs des revendications précédentes,
**caractérisé en ce que** le battant (1) présente au moins deux vitre (2, 3) disposées à distance l'une de l'autre.

4. Outil d'aide au montage (33) selon la revendication 3,
**caractérisé en ce que** le battant (1) présente au moins un élément d'espacement (17) qui est disposé sur la périphérie entre les vitres (2, 3) et qui entoure hermétiquement l'espace interne du battant (1) prévu entre les vitres (2, 3) et qui est disposé au moins en partie en retrait depuis les arêtes extérieures des vitres (2, 3) en formant un espace libre (24).

5. Outil d'aide au montage (33) selon la revendication 2 ou 3,
**caractérisé en ce que** l'élément de bord (16) est disposé au moins en partie dans l'espace libre (24) entre les vitres (2, 3).
